(19) Europäisches Patentamt

European Patent Office

Office européen des brevets

(11) **EP 1 350 804 B1**

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(51) Int Cl.⁷: **C08G 77/06**, C08G 77/46, C08J 9/00

(21) Anmeldenummer: **02028963.3**

(22) Anmeldetag: **24.12.2002**

(54) **Verwendung organofunktionell modifizierter Polysiloxane zur Herstellung von Polyurethanweichschäumen**

Use of organofunctional polysiloxanes in the production of flexible polyurethane foams

Utilisation de polysiloxanes organofonctionnels dans la préparation d'une mousse de polyuréthane souple

(84) Benannte Vertragsstaaten:
**DE FR GB**

(30) Priorität: **26.03.2002 DE 10213353**

(43) Veröffentlichungstag der Anmeldung:
**08.10.2003 Patentblatt 2003/41**

(73) Patentinhaber: **Goldschmidt AG**
**45127 Essen (DE)**

(72) Erfinder:
• **Boinowitz, Tammo, Dr.**
**45131 Essen (DE)**
• **Burkhart, Georg, Dr.**
**45239 Essen (DE)**
• **Eyrisch, Oliver, Dr,**
**Degussa Chem. Shanghai Co Ltd**
**Shanghai, 201108 P.R.C. (CN)**
• **Hoffmann, Ralf, Dr.**
**48308 Senden (DE)**
• **Knott, Wilfried, Dr.**
**45141 Essen (DE)**

(56) Entgegenhaltungen:
**EP-A- 0 275 563      EP-A- 1 052 006**
**EP-A- 1 104 779**

**Beschreibung**

Die Erfindung betrifft die Verwendung von Blockcopolymeren mit verknüpften Siloxanblöcken als Additiv bei der Herstellung von Polyurethanweichschäumen.

Bei der Herstellung von Polyurethanweichschäumen werden dem Gemisch der Rohstoffe Polysiloxan-Polyoxyalkylen-Blockmischpolymerisate zugesetzt, welche vielfältige Aufgaben haben und u. a. die Ausbildung eines gleichmäßigen Porengefüges ermöglichen und den gebildeten Schaum bis zur Beendigung der Reaktion stabilisieren. Jedoch sind nicht alle Polysiloxan-Polyoxyalkylen-Blockmischpolymerisate in gleicher Weise geeignet. Um als Polyurethan-Schaumstabilisatoren brauchbar zu sein, müssen die Polyoxyalkylenblöcke und der Polysiloxanblock der Blockmischpolymerisate in einem ausgewogenen Verhältnis vorliegen, wobei auch der Aufbau der beiden Blöcke von großer Bedeutung ist. Es gibt dabei für den Aufbau eines möglichst wirksamen Schaumstabilisators eine Vielzahl von Variablen sowohl für den Polyoxyalkylenblock wie für den Polysiloxanblock:

Der Polyoxyalkylenblock kann aus verschiedenen Oxyalkyleneinheiten, vornehmlich aus Oxyethylen-, Oxypropylen- und Oxybutyleneinheiten zusammengesetzt sein. Dabei können das Gewichtsverhältnis dieser Einheiten zueinander, ihre Sequenz sowie das Molgewicht des Polyoxyalkylenblockes variiert werden. Von Bedeutung ist auch die Endgruppe des Polyoxyalkylenblockes, die in bezug auf die Polyurethanbildung reaktiv (z. B. OH-Gruppe) oder inert (z. B. Alkoxy-Gruppe) sein kann. Der Polyoxyalkylenblock kann mit dem Polysiloxanblock durch eine hydrolytisch stabile C-Si-Bindung oder die hydrolytisch weniger stabile C-O-Si-Bindung verknüpft sein. Dabei können auch unterschiedliche Polyoxyalkylenblöcke an den Polysiloxanblock gebunden sein.

Der Polysiloxanblock kann in bezug auf Art und Anteil der Si-Einheiten variiert werden. Der Siloxanblock kann geradkettig oder verzweigt sein und unterschiedliches Molekulargewicht aufweisen. Die Polyoxyalkylenblöcke können end- und/oder seitenständig an den Polysiloxanblock gebunden sein.

Vorhersagen über Wirksamkeit eines Polysiloxan-Polyoxyalkylen-Blockmischpolymerisates als Schaumstabilisator können nur in gewissem Maße gegeben werden. Der Fachmann ist deshalb genötigt, die Variationsmöglichkeit weitgehend empirisch zu erproben. In Anbetracht der großen, nahezu unübersehbaren Anzahl der Variationsmöglichkeiten stellt die Auffindung im Sinne der Polyurethanherstellung besonders wirksamer spezieller Strukturparameter und entsprechender Blockmischpolymerisate eine fortschrittsraffende und somit erfinderische Leistung dar.

Polysiloxan-Polyoxyalkylen-Blockmischpolymerisate, welche im durchschnittlichen Molekül unterschiedliche Polyoxyalkylenreste aufweisen, sind bereits wiederholt beschrieben worden. Aus der großen Anzahl entsprechender Veröffentlichungen sollen stellvertretend die folgenden Schriften genannt werden:

DE-C-15 70 647: Chlorpolysiloxanylsulfate werden mit Gemischen von Alkylenoxid-Addukten umgesetzt, welche aus 50 bis 96 OH-Äquivalentprozent Polyalkylenglykolmonoethern, die aus Ethylenoxid- und Propylenoxideinheiten bestehen und einen Gehalt von 40 bis 70 Gew.-% Oxypropyleneinheiten und ein Molgewicht von 1000 bis 3000 aufweisen, deren Hydroxylgruppen vorzugsweise sekundär sind, und 5 bis 50 OH-Äquivalentprozent Alkylenoxid-Addukten mehrwertiger Hydroxylverbindungen eines Molgewichtes von 130 bis 3500, deren Polyalkylenglykolkomponente aus Ethylenoxid- und/oder Propylenoxideinheiten bestehen und die ein OH-Äquivalentgewicht bis zu 1750 haben und deren Hydroxylgruppen vorzugsweise sekundär sind, bestehen und wobei die Mengenverhältnisse so gewählt sind, dass auf ein Säureäquivalent des Chlorpolysiloxanylsulfates höchstens 1,4, vorzugsweise 1,05 bis 1,2 OH-Äquivalente kommen.

DE-C-16 94 366: Es werden als Schaumstabilisatoren solche Polysiloxan-Polyoxyalkylen-Blockmischpolymerisate verwendet, deren Polysiloxanblock in an sich bekannter Weise aufgebaut ist, deren Polyoxyalkylenblock jedoch aus 25 bis 70 Gew.-% eines Polyoxyalkylens mit einem durchschnittlichen Molekulargewicht von 1600 bis 4000 und einem Ethylenoxidgehalt von 20 bis 100 Gew.-%, Rest Propylenoxid und gegebenenfalls höhere Alkylenoxide, und 30 bis 75 Gew.-% eines Polyoxyalkylens mit einem durchschnittlichen Molekulargewicht von 400 bis 1200 und einem Ethylenoxidgehalt von 65 bis 100 Gew.-%, Rest Propylenoxid und gegebenenfalls höhere Alkylenoxide, besteht.

DE-A-25 41 865: Die Polysiloxan-Polyoxyalkylen-Blockmischpolymerisate sind bezüglich ihrer Polyoxyalkylenblöcke so definiert, dass der eine Polyoxyalkylenblock ein mittleres Molgewicht von 900 bis 1300 hat und zu 30 bis 55 Gew.-% aus Ethylenoxid, Rest Propylenoxid, und der andere Polyoxyalkylenblock ein mittleres Molgewicht von 3800 bis 5000 hat und zu 30 bis 50 Gew.-% aus Ethylenoxid, Rest Propylenoxid, besteht.

EP-A-0 275 563: Das in dieser Patentanmeldung beschriebene Blockmischpolymerisat umfasst drei verschiedene Polyoxyalkylenblöcke, nämlich einen Block, welcher 20 bis 60 Gew.-% Oxyethyleneinheiten enthält, bei einem Molgewicht von 3000 bis 5000, einen weiteren Block mit 20 bis 60 Gew.-% Oxyethyleneinheiten und einem Molgewicht von 800 bis 2900 und einen dritten Block nur aus Polyoxypropyleneinheiten und einem Molgewicht von 130 bis 1200.

Trotz der beschriebenen Breite an zugänglichen Produkten, die nach dem Stand der Technik herstellbar sind, gibt es immer noch weiteren Optimierungsbedarf für die Herstellung von Additiven zur Produktion von Polyurethanschäumen. Dieser Optimierungsbedarf resultiert zum einen aus der Vielzahl der möglichen Polyurethanschaumtypen, z. B. Weichschaum, Hartschaum, Esterschaum, Kaltschaum, Verpackungsschaum, flammlaminierbarer Schaum, Formschaum, Integralschaum etc., zum anderen auch aus neueren Verschäumungstechniken wie Variable Pressure Foaming, Verschäumungen mit unter Druck stehenden inerten Gasen.

Darüber hinaus kann eine bewusste, gezielte Eingrenzung der beschriebenen Breite zu anwendungstechnisch optimierten Produkten führen, die bisher in der Fülle der bekannten Bandbreiten nicht aufgefunden wurden.

Die Erfindung betrifft die Verwendung organofunktionell modifizierter Polysiloxane der allgemeinen Formel

$$R\text{-}Si(CH_3)_2O\text{-}[Si(CH_3)_2O\text{-}]_x\text{-}[SiCH_3R^1O\text{-}]_y\text{-}[SiCH_3R^2O\text{-}]_z\text{-}[SiCH_3R^0O\text{-}]_n\text{-}Si(CH_3)_2\text{-}R$$

wobei die Reste

R ein Alkyl- oder Arylrest von 1-12 Kohlenstoffatomen, $R^1$ oder $R^2$ sind,
$R^0$, $R^1$ und $R^2$ Polyalkylenoxid-Polyether der Formel

$$-C_mH_{2m}O(C_2H_4O)_a(C_3H_6O)_bR^3$$

darstellen, wobei

n>=0;
x,y,z > 0;
x+y+z+n zwischen 50 und 250,
das Verhältnis x/(y+z+n) > 15, bevorzugt x/(y+z+n) > 18 liegt;
n/(n+y+z) < 0,2;

wobei

$R^0$  ein mittleres Molekulargewicht zwischen 500 und 6000 g/mol besitzt, a+b>0 ist, b/a zwischen 0 und 1,5.
$R^1$  ein mittleres Molekulargewicht zwischen 3000 und 6000 g/mol besitzt, a+b>0 ist, b/a zwischen 0 und 2,0, vorzugsweise zwischen 0,8 und 1,2 liegt,
$R^2$  ein mittleres Molekulargewicht zwischen 500 und 2000 g/mol, vorzugsweise zwischen 1200 und 1700 g/mol besitzt, a+b>0 ist, b/a zwischen 1,1 und 4, vorzugsweise zwischen 1,3 und 2 liegt,
$R^3$  ein einwertiger organischer Rest einschließlich eines Acylrestes, jedoch kein Wasserstoffrest ist.

Für den Fachmann ist offensichtlich, dass die erhaltenen Verbindungen in Form eines Gemisches vorliegen, dessen Verteilung im Wesentlichen durch statistische Gesetze bestimmt wird. Die Werte für x, y, z sowie a und b entsprechen daher Mittelwerten.

Die erfindungsgemäß verwendeten Polysiloxane werden im Allgemeinen hergestellt durch eine platinkatalysierte Additionsreaktion eines Siloxans enthaltend ein Silanwasserstoffatom mit einem linearen Polyoxyalkylenoxid-Polyether, dessen lineare Kette an einem Ende blockiert ist mit einer Alkylenoxygruppe (wie Allyloxy- oder Vinyloxy-) und an einem anderen Ende beispielsweise mit einer Alkoxy-, Aralkyloxy- oder Acyloxygruppe verschlossen ist wie nach folgender Gleichung:

$$XSiH + H_2C{=}CHCH_2OR^3 \rightarrow XSiCH_2CH_2CH_2OR^3$$

Die erfindungsgemäßen Polysiloxane sind grundsätzlich bekannt. Überraschenderweise wurde jedoch gefunden, dass Polysiloxane mit

(i) einem besonders niedrigen Derivatisierungsgrad, charakterisiert durch x/(n+y+z) > 15, in Verbindung mit einem
(ii) gezielt gewählten Propylenoxid/Ethylenoxid-Verhältnis in einer der Polyetherseitenketten ($R^2$; b/a zwischen 1,1 und 4) sowie in Verbindung mit
(iii) der ausschließlichen Verwendung sogenannter endverschlossenen Polyalkylenoxid-Polyether (d.h. $R^3$ ist kein Wasserstoffrest)

in der Lage sind, Polyurethanweichschäume in besonders effizienter Weise zu stabilisieren. Nur wenn alle drei Bedingungen (i)-(iii) gleichermaßen erfüllt sind, werden zwei wichtige anwendungstechnische Eigenschaften von Polyethersiloxan-Stabilisatoren, die Aktivität und das Verarbeitungsspiel, in bisher unerreichter Weise optimiert.

Die in (iii) formulierte Randbedingung schließt nicht herstellungsbedingte Restmengen an unverschlossenen

Polyethern (d.h. $R^3$ ist Wasserstoff) aus, die in bestimmten Fällen in einem Anteil von bis zu 10% in endverschlossenen Polyethern enthalten sein können.

Die Aktivität eines Stabilisators wird durch dessen notwendige minimale Einsatzkonzentration charakterisiert. Setzt man zu wenig ein, so beobachtet man einen Rückfall des Polyurethanweichschaumes nach der Ansteigphase, im schlimmsten Fall kollabiert der Schaum und fällt in sich zusammen. Demnach kann der Schaumproduzent von einem aktiveren Polyethersiloxan-Stabilisator in ökonomisch vorteilhafter Weise deutlich weniger einsetzen als von einem weniger aktiven.

Das Verarbeitungsspiel eines Polyethersiloxan-Stabilisators beschreibt dessen Toleranz bezüglich Veränderungen der Produktionsbedingungen bei der Schaumherstellung, wie beispielsweise Änderungen der Rezeptur, des Klimas etc. Diese Änderungen können zu unerwünschten Schwankungen der Schaumqualität führen, die sich insbesondere in Schwankungen der Offenzelligkeit der Schäume manifestiert. Demnach weisen Schäume, die durch einen Stabilisator mit weitem Verarbeitungsspiel stabilisiert werden, eine konsistentere, höhere Offenzelligkeit auf. Demgegenüber führt die Verwendung von Stabilisatoren mit engem Verarbeitungsspiel zu vergleichsweise unerwünscht geschlossenzelligeren Schäumen, deren Geschlossenzelligkeit zudem stark schwanken kann.

Ein qualitativ hochwertiger Stabilisator würde sich demnach sowohl durch eine hohe Aktivität als auch durch ein breites Verarbeitungsspiel auszeichnen.

Die bisherige Erfahrung hat jedoch gelehrt, dass strukturbedingt eine gleichzeitige Optimierung der beiden beschriebenen Eigenschaften von Polyethersiloxan-Stabilisatoren nur schwer möglich zu sein scheint. So weisen einerseits hochaktive Stabilisatoren ein meist nur mäßiges Verarbeitungsspiel auf, andererseits zeigen Stabilisatoren mit breitem Verarbeitungsspiel in der Regel eine nur niedrige bis mittlere Aktivität. Je nach Empfindlichkeit der Anwendung werden in der Praxis Stabilisatoren des einen oder des anderen Typs verwendet. So werden mit hochaktiven Stabilisatoren meist Schäume mit niedrigen Dichten hergestellt, empfindlichere höhere Schaumdichten dagegen mit Stabilisatoren mit ausgeprägtem Verarbeitungsspiel. Der Schaumproduzent war bisher gezwungen zur Herstellung einer vollständigen Palette von Schaumtypen mehrere unterschiedliche Polyethersiloxan-Stabilisatoren bereitzuhalten.

Die erfindungsgemäßen Polyethersiloxan-Stabilisatoren besitzen eine hohe Aktivität und weisen ein für hochaktive Stabilisatoren bisher unerreicht breites Verarbeitungsspiel auf. Demzufolge ist es ohne weiteres möglich, durch alleinige Verwendung der erfindungsgemäßen Stabilisatoren den kompletten Dichtebereich handelsüblicher Weichschäume von ca. 10-100 kg/m$^3$ ohne Inkaufnahme anwendungstechnischer Kompromisse praktisch abzudecken. Für den Schaumproduzenten ergibt sich somit eine deutlich vereinfachte Rohstofflogistik.

Ausführungsbeispiele:

Synthesen

Es wurden folgende erfindungsgemäße Blockcopolymere I bis IV und nicht erfindungsgemäße Blockcopolymere V bis VIII als Vergleichsbeispiele hergestellt.

Blockcopolymer I: R = Methyl; $R^1$ = $-C_3H_6O(C_2H_4O)_{35}(C_3H_6O)_{35}CH_3$; $R^2$ = $-C_3H_6O(C_2H_4O)_{9,7}(C_3H_6O)_{15,6}CH_3$; x = 64,5; y,z = 1, 75

Blockcopolymer II: R = Methyl; $R^1$ = $-C_3H_6O(C_2H_4O)_{35}(C_3H_6O)_{35}COCH_3$; $R^2$ = $-C_3H_6O(C_2H_4O)_{9,7}(C_3H_6O)_{15,6}COCH_3$; x = 93; y = 3,0; z = 2,0

Blockcopolymer III: R = Methyl; $R^1$ = $-C_3H_6O(C_2H_4O)_{35}(C_3H_6O)_{35}CH_3$; $R^2$ = $-C_3H_6O(C_2H_4O)_{7,5}(C_3H_6O)_{20,1}CH_3$; x = 64,5; y,z = 1,75

Blockcopolymer IV: R = Methyl; $R^1$ = $-C_3H_6O(C_2H_4O)_{40}(C_3H_6O)_{40}CH_3$; $R^2$ = $-C_3H_6O(C_2H_4O)_{9,7}(C_3H_6O)_{15,6}CH_3$; x = 64,5; y,z = 1,75

Blockcopolymer V: R = Methyl; $R^1$ = $-C_3H_6O(C_2H_4O)_{35}(C_3H_6O)_{35}CH_3$; $R^2$ = $-C_3H_6O(C_2H_4O)_{3,6}(C_3H_6O)_{20,2}CH_3$; x = 64,5; y,z = 1,75

Blockcopolymer VI: R = Methyl; $R^1$ = $-C_3H_6O(C_2H_4O)_{35}(C_3H_6O)_{35}CH_3$; $R^2$ = $-C_3H_6O(C_2H_4O)_{12,9}(C_3H_6O)_{13,1}CH_3$; x = 64,5; y,z = 1, 75

Blockcopolymer VII: R = Methyl; $R^1$ = $-C_3H_6O(C_2H_4O)_{35}(C_3H_6O)_{35}CH_3$; $R^2$ = $-C_3H_6O(C_2H_4O)_{9,7}(C_3H_6O)_{15,6}CH_3$; x = 61,6; y,z = 3, 18

Blockcopolymer VIII: R = Methyl; $R^1$ = -$C_3H_6O(C_2H_4O)_{35}(C_3H_6O)_{35}H$; $R^2$ = -$C_3H_6O(C_2H_4O)_{9,7}(C_3H_6O)_{15,6}CH_3$; x = 64,5; y,z = 1,75

Tabelle 1

| Typ | Siloxan | Polyether | a($R^1$) | b($R^1$) | a($R^2$) | b($R^2$) | b($R^2$)/a($R^2$) | $R^3$ | x | y | z |
|---|---|---|---|---|---|---|---|---|---|---|---|
| I | 1a) | 2a+b) | 35 | 35 | 9,7 | 15,6 | 1,6 | Methyl | 64,5 | 1,75 | 1,75 |
| II | 1b) | 2c+d) | 35 | 35 | 9,7 | 15,6 | 1,6 | Acetyl | 93 | 3,0 | 2,0 |
| III | 1a) | 2a+e) | 35 | 35 | 7,5 | 20,1 | 2,7 | Methyl | 64,5 | 1,75 | 1,75 |
| IV | 1a) | 2b+f) | 40 | 40 | 9,7 | 15,6 | 1,6 | Methyl | 64,5 | 1,75 | 1,75 |
| V | 1a) | 2a+g) | 35 | 35 | 3,6 | 20,2 | 5,6 | Methyl | 64,5 | 1,75 | 1,75 |
| VI | 1a) | 2a+h) | 35 | 35 | 12,9 | 13,1 | 1,0 | Methyl | 64,5 | 1,75 | 1,75 |
| VII | 1c) | 2a+b) | 35 | 35 | 9,7 | 15,6 | 1,6 | Methyl | 61,6 | 3,18 | 3,18 |
| VIII | 1a) | 2b+i) | 35 | 35 | 9,7 | 15,6 | 1,6 | Methyl/H | 64,5 | 1,75 | 1,75 |

Rohstoffe:

1. Siloxane:

a) $(CH_3)_3SiO-[(CH_3)_2SiO-]_{64,5}[(CH_3)HSiO-]_{3,5}Si(CH_3)_3$
b) $(CH_3)_3SiO-[(CH_3)_2SiO-]_{93}[(CH_3)HSiO-)_5Si(CH_3)_3$
c) $(CH_3)_3SiO-[(CH_3)_2SiO-]_{61,6}[(CH_3)HSiO-]_{6,4}Si(CH_3)_3$

2. Polyether:

a) $CH_2=CH-CH_2O-(C_2H_4O)_{35}(C_3H_6O)_{35}CH_3$
b) $CH_2=CH-CH_2O-(C_2H_4O)_{9,7}(C_3H_6O)_{15,6}CH_3$
c) $CH_2=CH-CH_2O-(C_2H_4O)_{35}(C_3H_6O)_{35}COCH_3$
d) $CH_2=CH-CH_2O-(C_2H_4O)_{9,7}(C_3H_6O)_{15,6}COCH_3$
e) $CH_2=CH-CH_2O-(C_2H_4O)_{7,5}(C_3H_6O)_{20,1}CH_3$
f) $CH_2=CH-CH_2O-(C_2H_4O)_{40}(C_3H_6O)_{40}CH_3$
g) $CH_2=CH-CH_2O-(C_2H_4O)_{3,6}(C_3H_6O)_{20,2}CH_3$
h) $CH_2=CH-CH_2O-(C_2H_4O)_{12,9}(C_3H_6O)_{13,1}CH_3$
i) $CH_2=CH-CH_2O-(C_2H_4O)_{35}(C_3H_6O)_{35}H$

Herstellung der Blockcopolymeren I bis VIII (siehe Tabelle 1)

In einem mit Rührer, Thermometer, Gaseinleitung und Rückflusskühler versehenen Kolben werden die Siloxane, Polyether vorgelegt (Typ siehe Tabelle 1. Durch die Apparatur wird Stickstoff geleitet, und unter Rühren wird der Kolbeninhalt auf 105 °C aufgeheizt. Bei 105 °C wird der Ansatz mit einer 10 %igen Lösung von $H_2PtCl_6 \cdot 6 H_2O$ in i-Propanol versetzt (ca. 0,6 g pro 1000 g Ansatz). Es setzt eine exotherme Reaktion ein. Dabei treten, abhängig von den eingesetzten Edukten, Temperaturerhöhungen von 10 bis 30 °C auf. Man lässt die Ansätze abreagieren und erreicht SiH-Umsätze von ≥ 97 % (bestimmt über in alkalischem Medium mit n-Butanol abspaltbarem Wasserstoff). Während der Reaktion wird der zunächst trübe Kolbeninhalt klar. Die Reaktionszeiten betragen in der Regel 1 bis 8 Stunden.
Die Polyether werden vorzugsweise im Überschuss eingesetzt (10 bis 40 %). Die oben beschriebene Reaktion kann auch unter Zusatz von Lösemitteln durchgeführt werden, was besonders dann vorteilhaft ist, wenn höherviskose Produkte entstehen. Dabei können Lösemittel eingesetzt werden, die nach der Reaktion abdestilliert werden können (z. B. Toluol, Xylol) oder solche, die nach der Reaktion im Endprodukt verbleiben können (z. B. Dipropylenglykol, Di- und Tripropylenglykolmono-n-butylether, Propylenglykolmonophenylether, doppelbindungsfreie Polyether).
In den Beispielen I bis VIII wurden die Blockcopolymere lösemittelfrei hergestellt, jedoch zur anwendungstechnischen Überprüfung mit jeweils der gleichen Menge Dipropylenglykol versetzt.

Anwendungstechnische Überprüfungen

Zum Austesten des Blockcopolymeren als Stabilisator werden Polyol, Wasser, Amin, Zinnoctoat, Stabilisator und ggf. Treibmittel unter gutem Rühren vermischt. Nach Zugabe des Isocyanats wird mit einem Glattrührer 7 Sek. bei 3000 U/Min. gerührt und das Gemisch in einen mit Papier ausgekleideten Holzkasten (Grundfläche 27 cm x 27 cm) gegossen.

Es entsteht ein Schaumstoff, von dem folgende Daten zur Beurteilung des eingesetzten Stabilisators gemessen werden:

1. Das Rücksacken des Schaumstoffes am Ende der Steigphase (in den nachfolgenden Tabellen mit Rückfall angegeben). Je höher der beobachtete Rückfall, desto geringer ist die Schaumstabilität, die wiederum mit der Aktivität des Blockcopolymers korreliert.

2. Die Luftdurchlässigkeit nach Aushärten des Schaumes nach ca. 1 Tag. Die Luftdurchlässigkeit ist angegeben in mm Staudruck Wassersäule, welcher sich aufbaut, wenn ein konstanter Luftstrom durch den Schaum geleitet wird. Je höher der angegebene Wert, desto geschlossenzelliger ist der Schaum und umgekehrt. Ein Wert von < 20 mm entspricht einem sehr offenzelligen, ein Wert von < 50 einem offenzelligen und ein Wert oberhalb ca. 50 mm einem geschlossenzelligen Schaum. Ein Wert von 300 mm entspricht einem luftundurchlässigen Schaum.

Während Schaumformulierung A ein vergleichsweise niedrige Dichte von 18 kg/m$^3$ liefert und kritisch hinsichtlich der Aktivität eines Stabilisators ist, produziert Schaumformulierung B eine eher hohe Dichte von ca. 55 kg/m$^3$ und ist damit kritisch hinsichtlich des Verarbeitungsspiels eines Stabilisators.

| | Schaumformulierung A | Schaumformulierung B |
|---|---|---|
| | Gew.-Teile | Gew.-Teile |
| Polyol (OHZ: 42, 10 % EO) | 100 | 100 |
| Wasser | 5,0 | 1,5 |
| Aminkatalysator | 0,15 Tegoamin® 33 | 0,85 Tegoamin® DMEA |
| Zinnoctoat | 0,23 | 0,1 |
| Methylenchlorid | 5 | 0 |
| Stabilisator | variiert | variiert |
| Isocyanat T 80 | 63,04 | 24,0 |

Tabelle 2

| Stabilisator | Schaumformulierung | Gew.-Teile | Rückfall [cm] | Luftdurchlässigkeit [mm Wassersäule] |
|---|---|---|---|---|
| I | A | 0,6 / 0,7 | 1,1 / 0,8 | 6 / 7 |
| II | A | 0,6 / 0,7 | 1,3 / 0,6 | 9 / 10 |
| III | A | 0,6 / 0,7 | 1,5 / 0,9 | 5 / 5 |
| IV | A | 0,6 / 0,7 | 0,9 / 0,6 | 11 / 13 |
| V | A | 0,6 / 0,7 | 3,5 / 1,7 | 5 / 6 |
| VI | A | 0,6 / 0,7 | 1,0 / 0,8 | 10 /12 |
| VII | A | 0,6 / 0,7 | 1,0 / 0,3 | 23 / 26 |
| VIII | A | 0,6 / 0,7 | 0,5 / 0,3 | 55 / 89 |
| TEGOSTAB* B 8228 | A | 0,6 / 0,7 | 0,7 / 0,5 | 11 / 12 |
| TEGOSTAB* B 8002 | A | 0,6 / 0,7 | Kollaps / 4,9 | - / 5 |
| I | B | 0,8 / 1,1 | 0,4 / 0,3 | 22 / 45 |
| II | B | 0,8 / 1,1 | 0,3 / 0,2 | 77 / 88 |
| III | B | 0,8 / 1,1 | 0,4 / 0,3 | 18 / 43 |
| IV | B | 0,8 / 1,1 | 0,3 / 0,3 | 34 / 50 |

EP 1 350 804 B1

Tabelle 2 (fortgesetzt)

| Stabilisator | Schaumformulierung | Gew.-Teile | Rückfall [cm] | Luftdurchlässigkeit [mm Wassersäule] |
|---|---|---|---|---|
| V | B | 0,8 / 1,1 | 0,4 / 0,4 | 20 / 41 |
| VI | B | 0,8 / 1,1 | 0,3 / 0,3 | 85 / 185 |
| VII | B | 0,8 / 1,1 | 0,4 / 0,3 | 90 / 147 |
| VIII | B | 0,8 / 1,1 | 0,1 / 0,1 | Schrumpf / Schrumpf |
| TEGOSTAB® B 8228 | B | 0,8 / 1,1 | 0,1 / 0,1 | 300 / 300 |
| TEGOSTAB® B 8002 | B | 0,8 / 1,1 | 0,6 / 0,6 | 32 / 62 |

Die erfindungsgemäßen Blockcopolymere I bis IV verbinden allesamt eine hohe Aktivität, ersichtlich durch den vergleichsweise niedrigen Rückfall in Formulierung A, mit einem weiten Verarbeitungsspiel, ersichtlich durch die vergleichsweise hohe Luftdurchlässigkeit in Formulierung B. Das kommerziell erhältliche TEGOSTAB® B 8228 ist zwar hochaktiv, weist jedoch ein eingeschränktes Verarbeitungsspiel auf, was sich durch vollständig geschlossene Schäume in Formulierung B manifestiert. Das ebenfalls kommerziell erhältliche TEGOSTAB® B 8002 liefert hingegen in Formulierung B offene Schäume, in Formulierung A jedoch wegen seiner geringen Aktivität hohe Rückfälle bis hin zum Kollaps.

Demzufolge wird TEGOSTAB® B 8228 zur Herstellung niedriger bis mittlerer Schaumdichten empfohlen, TEGOSTAB® B 8002 eher für höhere Schaumdichten. Die erfindungsgemäßen Blockcopolymere I bis IV eignen sich hingegen zur Stabilisierung des kompletten gängigen Dichtespektrums.

Das Vergleichsbeispiel V weist gegenüber I-IV eine schwächere Aktivität auf. Der Quotient $b(R^2)/a(R^2)$ ist mit 5,6 > 4 und damit außerhalb des beanspruchten Bereiches.

Das Vergleichsbeispiel VI weist gegenüber I-IV eine niedrigere Luftdurchlässigkeit auf. Der Quotient $b(R^2)/a(R^2)$ ist mit 1,0 < 1,1 und damit außerhalb des beanspruchten Bereiches.

Das Vergleichsbeispiel VII weist gegenüber I-IV ebenfalls eine niedrigere Luftdurchlässigkeit auf. Der Quotient $x/(n+y+z)$ ist mit 10 < 15 und damit außerhalb des beanspruchten Bereiches.

Das Vergleichsbeispiel VII führt gegenüber I-IV zu schrumpfenden Schäumen, die generell bei einer kompletten Luftundurchlässigkeit beobachtbar wird. Hier ist einer der Polyether nicht endverschlossen, d.h. $R^3$ ist ein Wasserstoffrest und damit nicht erfindungsgemäß.

**Patentansprüche**

1. Verwendung von organofunktionell modifizierten Polysiloxanen der allgemeinen Formel

$$R\text{-}Si(CH_3)_2O\text{-}[Si(CH_3)_2O\text{-}]_x\text{-}[SiCH_3R^1O\text{-}]_y\text{-}[SiCH_3R^2O\text{-}]_z\text{-}[SiCH_3R^0O\text{-}]_n\text{-}Si(CH_3)_2\text{-}R$$

wobei die Reste

R ein Alkyl- oder Arylrest von 1-12 Kohlenstoffatomen, $R^1$ oder $R^2$ sind,
$R^0$, $R^1$ und $R^2$ Polyalkylenoxid-Polyether der Formel

$$\text{- } C_mH_{2m}O(C_2H_4O)_a(C_3H_6O)_bR^3$$

darstellen, wobei

n>=0;
x, y, z > 0;
x+y+z+n zwischen 50 und 250,
das Verhältnis x/(y+z+n) > 15, bevorzugt x/(y+z+n) > 18 liegt;
n/(n+y+z) < 0,2;

wobei

$R^0$    ein mittleres Molekulargewicht zwischen 500 und 6000 g/mol besitzt, a+b>0 ist, b/a zwischen 0 und 1,5,

$R^1$    ein mittleres Molekulargewicht zwischen 3000 und 6000 g/mol besitzt, a+b>0 ist, b/a zwischen 0 und 2,0, vorzugsweise zwischen 0,8 und 1,2 liegt,

$R^2$    ein mittleres Molekulargewicht zwischen 500 und 2000 g/mol, vorzugsweise zwischen 1200 und 1700 g/mol besitzt, a+b>0 ist, b/a zwischen 1,1 und 4, vorzugsweise zwischen 1,3 und 2 liegt,

$R^3$    ein einwertiger organischer Rest einschließlich eines Acylrestes, jedoch kein Wasserstoffrest ist

zur Herstellung von Polyurethanweichschäumen.

**2.** Verwendung nach Anspruch 1, **dadurch gekennzeichnet, dass** y/(n+y+z) > 0,4 ist.

**3.** Verwendung nach den Ansprüchen 1 und 2, **dadurch gekennzeichnet, dass** z/(n+y+z) > 0,3 ist.

**4.** Verwendung nach den Ansprüchen 1 bis 3, **dadurch gekennzeichnet, dass** x/(y+z+n) < 25 ist.

**5.** Verwendung nach den Ansprüchen 1 bis 4, **dadurch gekennzeichnet, dass** x+y+z+n zwischen 60 und 80 ist.

**6.** Verwendung nach den Ansprüchen 1 bis 5, **dadurch gekennzeichnet, dass** R Methyl ist.

**7.** Verwendung nach den Ansprüchen 1 bis 6, **dadurch gekennzeichnet, dass** m = 2 bis 20, bevorzugt 3 ist.

**8.** Verwendung nach den Ansprüchen 1 bis 7, **dadurch gekennzeichnet, dass** n = 0 ist.

**9.** Verwendung nach den Ansprüchen 1 bis 8, **dadurch gekennzeichnet, dass**, bei $R^2$ a zwischen 9 und 10, b zwischen 15 und 16 liegt, x zwischen 60 und 70, y und z jeweils zwischen 1,2 und 2,3.

**Claims**

**1.** Use of organofunctionally modified polysiloxanes of the general formula

$$\text{R-Si(CH}_3\text{)}_2\text{O-[Si(CH}_3\text{)}_2\text{O-]}_x\text{-[SiCH}_3\text{R}^1\text{O-]}_y\text{-[SiCH}_3\text{R}^2\text{O-]}_z\text{-[SiCH}_3\text{R}^0\text{O-]}_n\text{-Si(CH}_3\text{)}_2\text{-R}$$

where the meaning of the radicals is as follows:

R is an alkyl or aryl radical of from 1-12 carbon atoms, $R^1$ or $R^2$,
$R^0$, $R^1$ and $R^2$ are polyalkylene oxide polyethers of the formula

$$-\text{C}_m\text{H}_{2m}\text{O(C}_2\text{H}_4\text{O)}_a\text{(C}_3\text{H}_6\text{O)}_b\text{R}^3$$

where

n > = 0;
x, y, z > 0;
x + y + z + n is from 50 to 250,
the ratio x/(y + z + n) > 15, preferably x/(y + z + n) > 18;
n/(n + y + z) < 0.2;

where

$R^0$    has an average molar mass of from 500 to 6000 g/mol, a + b > 0, and b/a is from 0 to 1.5,
$R^1$    has an average molar mass of from 3000 to 6000 g/mol, and a + b > 0, and b/a is from 0 to 2.0, preferably from 0.8 to 1.2,
$R^2$    has an average molar mass of from 500 to 2000 g/mol, preferably from 1200 to 1700 g/mol, and a + b > 0, and b/a is from 1.1 to 4, preferably from 1.3 to 2,
$R^3$    is a monovalent organic radical, this definition including an acyl radical, but is not a hydrogen radical,

for the production of flexible polyurethane foams.

2. Use according to Claim 1, **characterized in that** y/(n + y + z) > 0.4.

3. Use according to Claims 1 and 2, **characterized in that** z/(n + y + z) > 0.3.

4. Use according to Claims 1 to 3, **characterized in that** x/(y + z + n) < 25.

5. Use according to Claims 1 to 4, **characterized in that** x + y + z + n is from 60 to 80.

6. Use according to Claims 1 to 5, **characterized in that** R is methyl.

7. Use according to Claims 1 to 6, **characterized in that** m = from 2 to 20, preferably 3.

8. Use according to Claims 1 to 7, **characterized in that** n = 0.

9. Use according to Claims 1 to 8, **characterized in that**, in the case of $R^2$, a is from 9 to 10, b is from 15 to 16, x is from 60 to 70, and each of y and z is from 1.2 to 2.3.

**Revendications**

1. Utilisation de polysiloxanes organofonctionnels modifiés de formule générale

$$R\text{-}Si(CH_3)_2O\text{-}[Si(CH_3)_2O\text{-}]_x\text{-}[SiCH_3R^1O\text{-}]_y\text{-}[SiCH_3R^2O\text{-}]_z\text{-}$$

$$[SiCH_3R^0O\text{-}]_n\text{-}Si(CH_3)_2\text{-}R$$

dans laquelle

R représente un radical alkyle ou aryle comprenant 1 à 12 atomes de carbone, $R^1$ ou $R^2$, $R^0$, $R^1$ et $R^2$ représentent des poly(oxyde d'alkylène)-polyéthers de formule

$$\text{-}C_mH_{2m}O(C_2H_4O)_a(C_3H_6O)_bR^3$$

où

$n \geq 0$ ;
$x, y, z > 0$ ;
$x+y+z+n$ est compris entre 50 et 250 ;
le rapport $x/(y+z+n) > 15$, de préférence $x/(y+z+n) > 18$ ;
$n/(n+y+z) < 0,2$ ;

$R^0$ présentant un poids moléculaire moyen entre 500 et 6000 g/mole, a+b>0, b/a se situant entre 0 et 1,5,
$R^1$ présentant un poids moléculaire moyen entre 3000 et 6000 g/mole, a+b>0, b/a se situant entre 0 et 2,0, de préférence entre 0,8 et 1,2,
$R^2$ présentant un poids moléculaire moyen entre 500 et 2000 g/mole, de préférence entre 1200 et 1700 g/mole, a+b>0, b/a se situant entre 1,1 et 4, de préférence entre 1,3 et 2,
$R^3$ étant un radical organique monovalent, y compris un radical acyle, mais pas un radical hydrogène,

pour la préparation de mousses souples de polyuréthanne.

2. Utilisation selon la revendication 1, **caractérisée en ce que** y/(n+y+z) > 0,4.

3. Utilisation selon les revendications 1 et 2, **caractérisée en ce que** z/(n+y+z) > 0,3.

4. Utilisation selon les revendications 1 à 3, **caractérisée en ce que** x/(y+z+n) < 25.

5. Utilisation selon les revendications 1 à 4, **caractérisée en ce que** x+y+z+n est compris entre 60 et 80.

6. Utilisation selon les revendications 1 à 5, **caractérisée en ce que** R représente méthyle.

7. Utilisation selon les revendications 1 à 6, **caractérisée en ce que** m = 2 à 20, de préférence 3.

8. Utilisation selon les revendications 1 à 7, **caractérisée en ce que** n = 0.

9. Utilisation selon les revendications 1 à 8, **caractérisée en ce que** dans $R^2$, a est compris entre 9 et 10, b entre 15 et 16, x entre 60 et 70, y et z à chaque fois entre 1,2 et 2,3.